# EUROPÄISCHE PATENTSCHRIFT

(11) **EP 1 097 430 B1**
(45) Veröffentlichungstag und Bekanntmachung des Hinweises auf die Patenterteilung: **22.09.2004**
(21) Anmeldenummer: 99936547.1
(22) Anmeldetag: 15.07.1999
(51) Int. Cl.: G06K 7/00

(54) **KARTENLESER FÜR CHIPKARTEN**
CARD READER FOR CHIP CARDS
LECTEUR DE CARTE A PUCE

(30) Priorität: 15.07.1998 DE 29812626 U
(43) Veröffentlichungstag der Anmeldung: 09.05.2001
(73) Patentinhaber: SCM Microsystems GmbH, 85279 Pfaffenhofen (DE)
(72) Erfinder: NEIFER, Wolfgang, D-85354 Freising (DE)
(74) Vertreter: Degwert, Hartmut, Dipl.-Phys.
(86) Internationale Anmeldenummer: PCT/EP1999/005061
(87) Internationale Veröffentlichungsnummer: WO 2000/004486

(56) Entgegenhaltungen:
- DE-A- 4 310 517
- DE-U- 29 607 253
- DE-U- 29 723 227
- DE-U- 29 812 626
- FR-A- 2 735 251

## Beschreibung

Die Erfindung betrifft einen Kartenleser für Chipkarten, gemäß dem Oberbegriff von Patentanspruch 1.

Das Gehäuse eines solchen Kartenlesers weist an seinem vorderen Ende eine Vielfach-Kontaktleiste und an seinem hinteren Ende einen zwischen einer Bodenplatte und einer dazu parallelen Deckelplatte gebildeten Einführschlitz für die Chipkarte auf. Die ebenfalls im Format genormten Chipkarten haben etwa dieselbe Breite wie das Gehäuse nach dem PCMCIA-Format. Das Gehäuse ist daher an seinen langen Schmalseiten offen. Wenn nicht, wie beispielsweise in der DE 43 10 517 A1 beschrieben, eine Führungsmanschette vorgesehen wird, die aus dem Gerät herausragt, in welches der Kartenleser eingeschoben ist, sind die Bodenplatte und die Deckelplatte nur am vorderen Ende des Gehäuses miteinander verbunden und können daher leicht verbogen werden. Die genannte Führungsmanschette vermeidet zwar dieses Problem, ist jedoch nicht konform mit dem PCMCIA-Format, da das Gehäuse gegenüber diesem Format eine größere Länge aufweist. Störend ist auch, daß die Führungsmanschette aus dem Gerät heraussteht, in welches das Gehäuse des Kartenlesers eingeschoben ist.

Aus der FR-A-2 735 251 ist ein Kartenleser für Chipkarten mit einem Gehäuse im PCMCIA-Format bekannt, das an seinem vorderen Ende eine Vielfachkontaktleiste und an seinem hinteren Ende einen zwischen einer Bodenplatte und einer dazu parallelen Deckelplatte gebildeten Einführschlitz für die Chipkarte aufweist, wobei die Länge der Bodenplatte der des PCMCIA-Formats entspricht.

Aus der gattungsgemäßen DE-A-43 10 517 ist ein Kartenleser für Chipkarten bekannt, dessen Gehäuse am vorderen Ende einen Kragen aufweist, der aus dem Gerät hinaussteht, in welches das Gehäuse des Kartenlesers eingeschoben ist. Der Kragen weist eine Bodenplatte und eine parallel dazu angeordnete Deckelplatte auf, die einen Einführschlitz für eine Chipkarte bilden und am vorderen Ende des Gehäuses bündig abschließen.

Aus der DE-U-296 07 253 ist ein Kartenleser für Chipkarten bekannt, der ein Gehäuse im PCMCIA-Format aufweist. Am vorderen Ende des Gehäuses ist eine Einschubführung vorgesehen, die aus dem Gerät heraussteht, in das der Kartenleser eingeschoben ist. Eine Deckelplatte und eine dazu parallel mit Abstand angeordnete Bodenplatte sind im wesentlichen gleich lang. Das Gehäuse ist an seinen langen Schmalseiten mit Ausnahme im Bereich der Einschubführung im Chipkartenaufnahmebereich offen ausgestaltet.

Durch die Erfindung wird ein Kartenleser für Chipkarten geschaffen, der die Außenabmessungen des PCMCIA-Standardformats (ohne Extension) nicht überschreitet und dennoch eine erhöhte mechanische Stabilität aufweist. Gemäß der Erfindung ist das Gehäuse im PCMCIA-Format genormt, wobei die Länge der Bodenplatte der des PCMCIA-Formats entspricht und die Bodenplatte am hinteren Ende des Gehäuses über die Deckelplatte hinausragt.
Die gegenüber der Bodenplatte verminderte Länge der Deckelplatte führt zu einer geringeren Länge des wirksamen Hebels im Hinblick auf die am freien Ende der Deckelplatte angreifenden Kräfte. Eine weitere Verminderung der Länge dieses wirksamen Hebels wird dadurch erzielt, daß der Einführschlitz ein der Vielfach-Kontaktleiste benachbartes Ende aufweist, das etwa 15 bis 30 mm vom vorderen Ende des Gehäuses beabstandet ist. Die Chipkarte steht dann im eingeschobenen Zustand zwar weiter aus dem Gehäuse des Kartenlesers heraus, dies ist jedoch nicht störend; vielmehr wird durch den Überstand der Chipkarte sogar deren Handhabung erleichtert. Darüber hinaus wird durch die verkürzte Deckelplatte das Einführen der Chipkarte erleichtert, weil diese auf die vorstehende Kante der Bodenplatte aufgelegt werden kann und dort eine Führung findet.

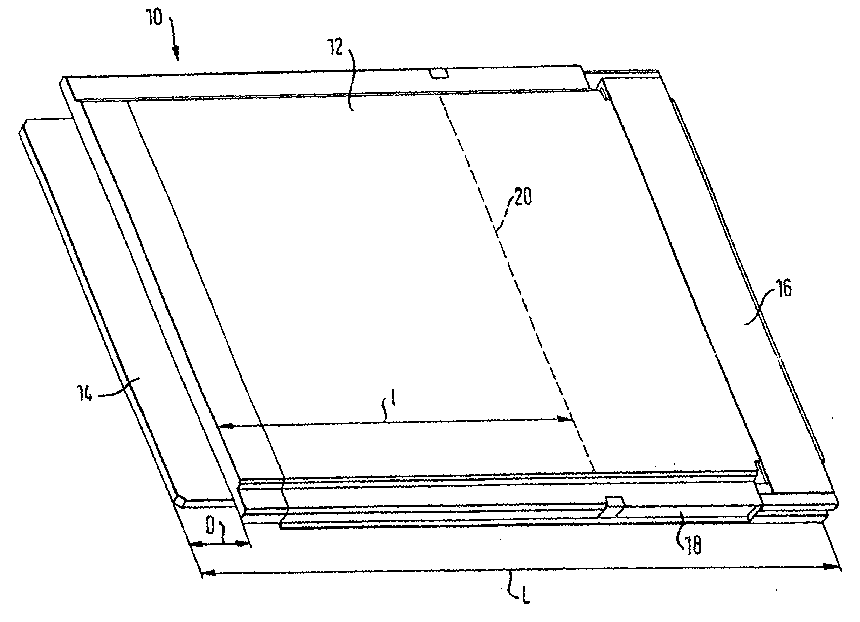

Weitere Merkmale und Vorteile der Erfindung ergeben sich aus der folgenden Beschreibung und aus der Zeichnung, auf die Bezug genommen wird. Die einzige Figur der Zeichnung zeigt eine Perspektivansicht des erfindungsgemäßen Kartenlesers.

In der Figur ist nur das Gehäuse des Kartenlesers gezeigt, da allein dieses für die Erfindung relevant ist.

Das Gehäuse des Kartenlesers 10 besteht aus einer Deckelplatte 12, einer parallel zu dieser in geringem Abstand angeordneten Bodenplatte 14, einer Vielfach-Steckkontaktleiste 16 am vorderen Stirnende des Gehäuses und aus zwei kurzen Seitenwänden 18 an den Schmalseiten des Gehäuses angrenzend an die Vielfach-Steckkontaktleiste 16. Die schmalen Seitenwände 18 erstrecken sich nur bis zu einer gestrichelt angedeuteten Linie 20, welche die Tiefe des Einführschlitzes für die Chipkarte begrenzt. Dieser Einführschlitz ist zwischen der Deckelplatte 12 und der Bodenplatte 14 gebildet.

Die Länge L der Bodenplatte entspricht dem entsprechenden Maß des Gehäuses im genormten PCMCIA-Format. Demgegenüber ist die Länge der Deckelplatte 12 um das Differenzmaß D vermindert. Die Länge des wirksamen Hebels für am freien Ende der Deckelplatte 12 einwirkende Kräfte ist in der Figur mit *l* bezeichnet. Durch die Verkürzung dieses Maßes *l* wird die mechanische Belastbarkeit des Gehäuses an seinem hinteren Ende erheblich gesteigert. Das Differenzmaß D beträgt etwa 3 bis 10 mm, und das Maß L-*l* etwa 15 bis 30 mm. An der freien hinteren Kante der Deckelplatte 12 ist ferner eine Schrägfläche vorgesehen, die den Einführschlitz erweitert und so die Einführung der Chipkarte begünstigt.

## Patentansprüche

1. Kartenleser für Chipkarten, mit einem Gehäuse, das an seinem vorderen Ende eine Vielfach-Kontaktleiste (16) und an seinem hinteren Ende einen zwischen einer Bodenplatte (14) und einer dazu parallelen Deckelplatte (12) gebildeten Einführschlitz für die Chipkarte aufweist, **dadurch gekennzeichnet, daß** das Gehäuse im PCMCIA-Format genormt ist, wobei die Länge der Bodenplatte (14) der des PCMCIA-Formats entspricht und die Bodenplatte (14) am hinteren Ende des Gehäuses über die Deckelplatte (12) hinausragt.

2. Kartenleser nach Anspruch 1, **dadurch gekennzeichnet, daß** die Bodenplatte (14) um etwa 3 bis 10 mm über die Deckelplatte (12) hinausragt.

3. Kartenleser nach Anspruch 1 oder 2, **dadurch gekennzeichnet, daß** der Einführschlitz ein der Vielfach-Kontaktleiste (16) benachbartes Ende (20) aufweist, das etwa 15 bis 30 mm von dem vorderen Ende des Gehäuses beabstandet ist.

4. Kartenleser nach Anspruch 3, **dadurch gekennzeichnet, daß** die Bodenplatte (14) mit der Deckelplatte (12) an beiden Schmalseiten des Gehäuses zwischen dessen vorderem Ende und dem der Vielfach-Kontaktleiste (16) benachbarten Ende (20) des Einführschlitzes starr verbunden ist.

5. Kartenleser nach Anspruch 3 oder 4, **dadurch gekennzeichnet, daß** der Einführschlitz an den Schmalseiten des Gehäuses offen ist.

6. Kartenleser nach einem der vorstehenden Ansprüche, **dadurch gekennzeichnet, daß** die Deckelplatte (12) an ihrer hinteren, freien Kante eine den Einführschlitz erweiternde Schrägfläche aufweist.

## Claims

1. A card reader for chip cards, comprising a housing which has a multiple contact row (16) at its front end and an insertion slot for the chip card at its rear end, the insertion slot being formed between a base plate (14) and a cover plate (12) which is parallel thereto, **characterized in that** the housing is standardized in the PCMCIA format, the length of the base plate (14) corresponding to that of the PCMCIA format and the base plate (14) protruding beyond the cover plate (12) at the rear end of the housing.

2. The card reader according to claim 1, **characterized in that** the base plate (14) protrudes beyond the cover plate (12) by approximately 3 to 10 mm.

3. The card reader according to claim 1 or claim 2, **characterized in that** the insertion slot has an end (20) which is adjacent to the multiple contact row (16) and is spaced approximately 15 to 30 mm from the front end of the housing.

4. The card reader according to claim 3, **characterized in that** the base plate (14) is rigidly connected with the cover plate (12) at the two narrow sides of the housing between the front end of the housing and the end (20) of the insertion slot adjacent to the multiple contact row (16).

5. The card reader according to claim 3 or claim 4, **characterized in that** the insertion slot is open at the narrow sides of the housing.

6. The card reader according to any one of the preceding claims, **characterized in that** the cover plate (12) has an oblique surface at its rear, free edge, said oblique surface widening the insertion slot.

## Revendications

1. Lecteur de carte pour cartes à puces, comportant un boîtier qui présente à son extrémité antérieure une réglette de contacts multiples (16) et à son extrémité postérieure une fente d'introduction pour la carte à puce, formée entre une plaque de fond (14) et une plaque de couvercle (12) parallèle à celle-ci, **caractérisé en ce que** le boîtier est normalisé au format PCMCIA, la longueur de la plaque de fond (14) correspondant à celle du format PCMCIA et la plaque de fond (14) dépassant au-delà de la plaque de couvercle (12) à l'extrémité du boîtier.

2. Lecteur de carte selon la revendication 1, **caractérisé en ce que** la plaque de fond (14) dépasse d'approximativement 3 à 10 mm au-delà de la plaque de couvercle (12).

3. Lecteur de carte selon la revendication 1 ou 2, **caractérisé en ce que** la fente d'introduction présente une extrémité (20) voisine de la réglette de contacts multiples (16), laquelle est à distance d'approximativement 15 à 30 mm de l'extrémité antérieure du boîtier.

4. Lecteur de carte selon la revendication 3, **caractérisé en ce que** la plaque de fond (14) est reliée de manière rigide avec la plaque de couvercle (12) sur les deux petits côtés du boîtier, entre son extrémité antérieure et l'extrémité (20) voisine de la réglette de contacts multiples (16).

5. Lecteur de carte selon la revendication 3 ou 4, **caractérisé en ce que** la fente d'introduction est ouverte sur les petits côtés du boîtier.

6. Lecteur de carte selon l'une des revendications précédentes, **caractérisé en ce que** la plaque de couvercle (12) présente sur son arête postérieure libre une surface oblique élargissant la fente d'introduction.
